**Europäisches Patentamt**

**European Patent Office**

**Office européen des brevets**

(19)

(11) Veröffentlichungsnummer: **0 022 160**

**A1**

(12) **EUROPÄISCHE PATENTANMELDUNG**

(21) Anmeldenummer: 80102813.5

(22) Anmeldetag: 21.05.80

(51) Int. Cl.³: **C 08 F 210/16**
C 08 F 4/24, C 08 F 2/34

(30) Priorität: 29.06.79 DE 2926231

(43) Veröffentlichungstag der Anmeldung:
**14.01.81 Patentblatt 81/2**

(84) Benannte Vertragsstaaten:
**AT BE CH DE FR GB IT LI LU NL SE**

(71) Anmelder: **BASF Aktiengesellschaft**
**Carl-Bosch-Strasse 38**
**D-6700 Ludwigshafen(DE)**

(72) Erfinder: **Gruber, Wolfgang, Dr.**
**Lorscher Ring 2B**
**D-6710 Frankenthal(DE)**

(72) Erfinder: **Frielingsdorf, Hans, Dr.**
**Auf dem Koeppel 4**
**D-6702 Bad Duerkheim 1(DE)**

(54) **Verfahren zum kontinuierlichen Herstellen von Äthylenterpolymerisaten, die neben Äthylen noch Propylen sowie ein C4- bis C6-Alpha-Monoolefin einpolymerisiert enthalten.**

(57) Die Erfindung liegt im Rahmen eines Verfahrens zum kontinuierlichen Herstellen von Äthylenterpolymerisaten, die (A) in überwiegender Menge Äthylen, (B) in untergeordneter Menge Propylen sowie (C) in untergeordneter Menge höheres α-Monoolefin einpolymerisiert enthalten, durch Polymerisation eines entsprechenden Gemisches der Monomeren mittels eines Katalysators vom Phillips-Typ, der Chromtrioxid auf einem anorganischen Träger enthält, in Abwesenheit flüssiger Verdünnungsmittel. Charakteristisch für das erfindungsgemäße Verfahren ist, daß (a) ein Katalysator eingesetzt wird, zu dessen Erzeugung man zunächst (a₁) ein feinteiliges Kieselsäure-Xerogel herstellt, indem man (a1.1) von einem relativ viel Feststoff enthaltenden Kieselsäure-Hydrogel ausgeht, (a1.2) aus diesem Hydrogel mittels einem Alkanol und-/ oder Alkanon die überwiegende Menge des in dem Hydrogel enthaltenden Wassers extrahiert, (a1.3) das dabei erhaltene Gel so stark trocknet, daß Xerogel-Bildung stattfindet, und (a1.4) das so gewonnene Xerogel in kleinteilige Form bringt, dann (a₂) dieses Xerogel aus einer Lösung von Chromtrioxid oder einer unter den Bedingungen der Stufe (a₃) in Chromtrioxid übergehenden Chromverbindung heraus unter Verdampfen des Lösungsmittels mit der gewünschten Menge Chrom belädt und schließlich (a₃) das hierbei resultierende Produkt in einem wasserfreien Sauerstoff enthaltenden Gasstrom erhitzt und (b) das Polymerisationsmedium ein zentrisches Rührbett aus kleinteiligem Polymerisat ist, mit den Maßgaben, daß (b₁) das Polymerisationsmedium im peripheren Bereich des Rührbetts nach oben und im zentralen Bereich des Rührbetts nach unten bewegt wird, und (b₂) im Polymerisationsmedium die Abfuhr der Polymerisationswärme im wesentlichen durch Entspannungskühlung erfolgt, derart, daß man (b2.1) das zu polymerisierende Gemisch der Monomeren außerhalb des Reaktionsraumes auf eine Temperatur, die unter der Temperatur im Reaktionsmedium liegt, sowie einen Druck, der über dem Druck im Reaktionsmedium liegt, bringt, (b2.2) dieses Gemisch in überschüssiger Menge in das Rührbett entspannt, (b2.3) den nicht durch Polymerisation verbrauchten Rest des Gemischs der Monomeren aus dem Reaktionsraum abzieht, und (b2.4) diesen Rest nach Ersetzen der durch Polymerisation verbrauchten Anteile der Monomeren sowie nach Wiederherstellen der für (b2.1) gewählten Bedingungen der Temperatur und des Druckes im Kreislauf erneut in das Rührbett entspannt.

Nach diesem Verfahren lassen sich in einfacher Weise Terpolymerisate erhalten, die sowohl eine gute Fließfähigkeit als auch anderweit gute Eigenschaften haben.

BASF Aktiengesellschaft                    O.Z. 0050/033935

Verfahren zum kontinuierlichen Herstellen von Äthylenterpolymerisaten, die neben Äthylen noch Propylen sowie ein $C_4$- bis $C_6$-α-Monoolefin einpolymerisiert enthalten

Die vorliegende Erfindung betrifft ein Verfahren zum kontinuierlichen Herstellen von Äthylenterpolymerisaten, die eine Dichte (nach DIN 53 479) von 0,91 bis 0,95, insbesondere 0,915 bis 0,935 g/cm$^3$ sowie einen Schmelzindex (190$^o$C/2,16 kg nach DIN 53 735) von 0,01 bis 2, insbesondere 0,03 bis 1,6 g/10 min aufweisen und

(A)  auf 100 Molteile einpolymerisiertes Äthylen

(B)  0,1 bis 10, insbesondere 0,5 bis 7 Molteile einpolymerisiertes Propylen sowie

(C)  0,1 bis 7, insbesondere 0,3 bis 4 Molteile einpolymerisiertes $C_4$- bis $C_6$-α-Monoolefin

enthalten, durch Polymerisation eines entsprechenden Gemischs der zugrundeliegenden Monomeren mittels eines Katalysators vom Phillips-Typ, der Chromtrioxid auf einem anorganischen Träger enthält, bei Temperaturen im Bereich von 60 bis 120, insbesondere 70 bis 120$^o$C und Drücken im Bereich von 10 bis 80, insbesondere 15 bis 50 bar in Abwesenheit flüssiger Verdünnungsmittel. Verfahren dieser Gattung - alo das Herstellen von Äthylenterpolymerisaten durch Polymerisation eines Gemisches aus (A) Äthylen, (B) Propylen und (C) einem $C_4$- bis $C_6$-α-Monoolefin mittels eines Katalysators vom Phillips-Typ in Abwesenheit flüssiger Verdünnungsmittel - sind bekannt; vgl. z.B. die DE-OSen 21 04 656 und 26 09 889.

HWz/BL

Des weiteren sind Äthylenterpolymerisate der nach dem eingangs definierten Verfahren erhältlichen Art bereits durch Verfahren einer anderen Gattung erhalten worden; vgl. z.B. die DE-OSen 14 45 303 und 22 06 429.

Das Eigenschaftsspektrum der in Rede stehenden Terpolymerisate macht diese für eine Reihe von Anwendungsgebieten interessant, so insbesondere auch für die Gebiete Rohre, Kabelisolierungen und verschweißbare Folien. Für die Gebiete Rohre und Kabelisolierungen wird vom Polymerisat u.a. eine möglichst gute Fließfähigkeit im Verein mit einer möglichst hohen Spannungsrißkorrosionsfestigkeit verlangt, für das Gebiet der verschweißbaren Folien u.a. eine möglichst gute Fließfähigkeit im Verein mit einer möglichst hohen Reißdehnungsfestigkeit der Schweißnaht. Hier lassen die bekannten Terpolymerisate noch den einen oder anderen Wunsch offen, oder aber ihre Herstellung ist noch relativ aufwendig.

Hieraus ergab sich die Aufgabenstellung zur vorliegenden Erfindung: Durch ein glatt zu führendes relativ einfaches Verfahren Terpolymerisate der in Rede stehenden Art mit wünschenswert guten oder verbesserten Eigenschaften, insbesondere auch der oben erwähnten, zugänglich zu machen.

Es wurde gefunden, daß die gestellte Aufgabe gelöst werden kann mit einer Ausgestaltung des eingangs definierten Verfahrens, für die man (a) einen an sich bekannten, in besonderer Weise erzeugten Katalysator und (b) eine an sich ebenfalls bekannte, besondere Verfahrensführung ausgewählt und miteinander kombiniert hat.

Gegenstand der vorliegenden Erfindung ist dementsprechend ein Verfahren zum kontinuierlichen Herstellen von Äthylenterpolymerisaten, die eine Dichte (nach DIN 53 479) von 0,91 bis 0,95, insbesondere 0,915 bis 0,935 g/cm$^3$ sowie einen Schmelzindex (190°C/2,16 kg nach DIN 53 735) von 0,01 bis 2, insbesondere 0,03 bis 1,6 g/10 min aufweisen und

(A)   auf 100 Molteile einpolymerisiertes Äthylen

(B)   0,1 bis 10, insbesondere 0,5 bis 7 Molteile einpolymerisiertes Propylen sowie

(C)   0,1 bis 7, insbesondere 0,3 bis 3 Molteile einpolymerisiertes $C_4$- bis $C_6$-$\alpha$-Monoolefin

enthalten, durch Polymerisation eines entsprechenden Gemisches der zugrundeliegenden Monomeren mittels eines Katalysators vom Phillips-Typ, der Chromtrioxid auf einem anorganischen Träger enthält, bei Temperaturen im Bereich von 60 bis 120, insbesondere 70 bis 120°C und Drücken im Bereich von 10 bis 80, insbesondere 15 bis 50 bar in Abwesenheit flüssiger Verdünnungsmittel. Das erfindungsgemäße Verfahren ist dadurch gekennzeichnet, daß

(a)   ein Katalysator eingesetzt wird, zu dessen Erzeugung man

      ($a_1$)   zunächst ein feinteiliges Kieselsäure-Xerogel herstellt, indem man

      ($a_{1.1}$)   von einem 10 bis 25, vorzugsweise 12 bis 20 und insbesondere 14 bis 20 Gewichtsprozent Feststoff (berechnet als Siliciumdioxid) enthaltenden Kieselsäure-Hydrogel ausgeht,

(a$_{1.2}$) aus diesem Hydrogel mittels einer organischen
Flüssigkeit aus der Reihe der C$_1$- bis C$_4$-Alka-
nole und/oder C$_3$- bis C$_5$-Alkanone mindestens
60 %, insbesondere mindestens 90 % des in dem
Hydrogel enthaltenen Wassers extrahiert,

(a$_{1.3}$) das dabei erhaltene entwässerte, mit der organischen Flüssigkeit behandelte Gel solange
trocknet, bis bei 100°C unter einem Vakuum
von 10 Torr während 30 Minuten kein Gewichtsverlust mehr auftritt (Xerogel-Bildung) und

(a$_{1.4}$) das so gewonnene Xerogel auf Teile mit einem
Durchmesser von 20 bis 2000, insbesondere 40
bis 300 um bringt,

(a$_2$) dann dieses Xerogel aus einer 0,05- bis 5-gewichtsprozentigen Lösung von Chromtrioxid in
einem C$_3$- bis C$_5$-Alkanon oder einer 0,05- bis
15-gewichtsprozentigen Lösung einer unter den Bedingungen der Stufe (a$_3$) in Chromtrioxid übergehenden Chromverbindung in einem C$_1$- bis C$_4$-Alka-
nol - wobei das jeweilige Lösungsmittel nicht
mehr als 20, vorzugsweise nicht mehr als 5 Gewichtsprozent Wasser enthalten darf - heraus unter
Verdampfen des Lösungsmittels mit der gewünschten
Menge Chrom belädt und

(a$_3$) schließlich das hierbei resultierende Produkt in
einem wasserfreien, Sauerstoff in einer Konzentration von über 10 Volumenprozent enthaltenden Gasstrom 10 bis 1000 Minuten auf einer Temperatur von
400 bis 1100°C hält; und

b) das Polymerisationsmedium ein zentrisches Rührbett aus kleinteiligem Polymerisat ist, mit den Maßgaben, daß

($b_1$) das Polymerisationsmedium im peripheren Bereich des Rührbetts nach oben und im zentralen Bereich des Rührbetts nach unten bewegt wird, derart, daß im Rührbett eine Froudezahl von 0,5 bis 5, insbesondere 1,5 bis 3,5 gegeben ist, und

($b_2$) im Polymerisationsmedium die Abfuhr der Polymerisationswärme im wesentlichen durch Entspannungskühlung erfolgt, derart, daß man

($b_{2.1}$) das zu polymerisierende Gemisch der Monomeren außerhalb des Reaktionsraumes auf eine Temperatur, die mindestens 30, insbesondere mindestens $50^{\circ}C$ unter der Temperatur im Reaktionsmedium liegt, sowie einen Druck, der mindestens 20, insbesondere mindestens 35 bar über dem Druck im Reaktionsmedium liegt, bringt,

($b_{2.2}$) dieses Gemisch in überschüssiger Menge in das Rührbett entspannt,

($b_{2.3}$) den nicht durch Polymerisation verbrauchten Rest des Gemischs der Monomeren aus dem Reaktionsraum abzieht, und

($b_{2.4}$) diesen Rest nach Ersetzen der durch Polymerisation verbrauchten Anteile der Monomeren sowie nach Wiederherstellen der für ($b_{2.1}$) gewählten Bedingungen der Temperatur und des Druckes im Kreislauf erneut in das Rührbett entspannt.

Die beiden, in Kombination miteinander für das erfindungsgemäße Verfahren kennzeichnenden Maßnahmen (a) und (b) sind

⌐ wie bereits gesagt - jeweils für sich allein genommen be-¬
reits bekannter Stand der Technik.

Das Herstellen eines für den Einsatz im Rahmen des erfindungsgemäßen Verfahrens besonders gut geeigneten Katalysators (a) ist z.B. bis ins Einzelne der DE-OS 25 40 279 zu
entnehmen; - auf die insoweit ausdrücklich Bezug genommen
wird, und womit sich nähere Erläuterungen der erfindungsgemäßen Einzelmaßnahme (a) erübrigen.

Sinngemäß das Gleiche gilt für die andere erfindungsgemäße Einzelmaßnahme (b); - von ihr findet sich eine detaillierte Schilderung in der DE-OS 25 39 103.

Insgesamt kann gesagt werden, daß das erfindungsgemäße Verfahren aus an sich bekannten Einzelelementen des Standes
der Technik zusammengesetzt ist und daß daher die erfolgreiche Durchführung dieses Verfahrens für den Fachmann
ohne weiteres möglich ist. Der Vollständigkeit halber ist
allenfalls zu erwähnen, daß sich beim erfindungsgemäßen Verfahren auch die Molekulargewichte der Polymerisate - und
damit deren Schmelzindizes - durch die einschlägig üblichen
Maßnahmen regeln lassen, z.B. erniedrigen - womit sich die
Schmelzindizes erhöhen - insbesondere durch Erhöhung der
Polymerisationstemperatur und/oder durch Regler.

Beispiele 1 bis 4

Die Polymerisation wird jeweils durchgeführt in einem zylindrischen Polymerisationsreaktor, der ein Volumen von
200 l und ein Verhältnis von Höhe:Durchmesser von 2,1:1,0
hat, einen Wendelrührer aufweist wie er in den Patentansprüchen 1 mit 2 und 6 der DE-AS 12 18 265 definiert ist
und während der Polymerisation im kontinuierlich-stationären Zustand zu 5/7 seiner Höhe mit (feinteiligem) Polymerisat gefüllt ist.

Bei jeweils einem konstant gehaltenen Druck im Reaktor von 35 bar werden mittels 0,75 g/Stunde Katalysator (kontinuierlich zugegeben) die in der nachstehenden Tabelle I näher bezeichneten Monomerengemische bei den in der Tabelle I ebenfalls angegebenen Temperaturen (T in $^{o}$C) jeweils kontinuierlich und in Abwesenheit flüssiger Verdünnungsmittel polymerisiert. Die Produktivität des Katalysators (PK in g Polymerisat pro g Katalysator), die Zusammensetzung der erhaltenen Terpolymerisate sowie deren Dichte (nach DIN 53 479 in g/cm$^3$) und Schmelzindizes (MI, 190$^{o}$C/2,16 kg nach DIN 53 735 in g Polymerisat pro 10 Minuten) finden sich wiederum in der nachstehenden Tabelle I bzw. II).

Als die eine erfindungsgemäße Besonderheit wird (a) jeweils ein Katalysator eingesetzt, zu dessen Erzeugung man

(a$_1$) zunächst ein feinteiliges Kieselsäure-Xerogel herstellt, indem man

(a$_{1.1}$) von einem etwa 17 Gewichtsprozent Feststoff (berechnet als Siliciumdioxid) enthaltenden Kieselsäure-Hydrogel ausgeht (hergestellt wie im Beispiel der DE-OS 25 40 279 beschrieben),

(a$_{1.2}$) aus diesem Hydrogel mittels Äthanol 92 % des in dem Hydrogel enthaltenen Wassers extrahiert,

(a$_{1.3}$) das dabei erhaltene entwässerte, mit der organischen Flüssigkeit behandelte Gel solange trocknet, bis bei 100°C unter einem Vakuum von
10 Torr während 30 Minuten kein Gewichtsverlust mehr auftritt und

(a$_{1.4}$) das so gewonnene Xerogel auf Teile mit einem
Durchmesser von 50 bis 250 µm bringt,

(a$_2$) dann dieses Xerogel aus einer 3,5-gewichtsprozentigen
Lösung von Chromnitrat-Hydrat in Äthanol - wobei
das Äthanol nicht mehr als 5 Gewichtsprozent Wasser
enthält - heraus unter Verdampfen des Äthanols mit
1 g Chrom pro 100 g SiO$_2$ belädt und

(a$_3$) schließlich das hierbei resultierende Produkt in
wasserfreier Luft 300 Minuten auf einer Temperatur
von 900°C hält.

Als die andere erfindungsgemäße Besonderheit wird (b) das
Polymerisationsverfahren so ausgestaltet, daß das Polymerisationsmedium ein zentrisches Rührbett aus kleinteiligem
Polymerisat ist, mit den Maßgaben, daß

(b$_1$) das Polymerisationsmedium im peripheren Bereich des
Rührbetts nach oben und im zentralen Bereich des
Rührbetts nach unten bewegt wird, derart, daß im Rührbett eine Froudezahl von 2,67 gegeben ist, und

(b$_2$) im Polymerisationsmedium die Abfuhr der Polymerisationswärme im wesentlichen durch Entspannungskühlung
erfolgt, derart, daß man

(b$_{2.1}$) das zu polymerisierende Gemisch der Monomeren
außerhalb des Reaktionsraumes auf eine Temperatur, die 70°C unter der Temperatur im Reaktionsmedium liegt, sowie einen Druck, der
65 bar über dem Druck im Reaktionsmedium liegt,
bringt,

$(b_{2.2})$ dieses Gemisch in überschüssiger Menge in das
Rührbett entspannt,

$(b_{2.3})$ den nicht durch Polymerisation verbrauchten
Rest (= etwa 90 %) des Gemisches der Monomeren
aus dem Reaktionsraum abzieht, und

$(b_{2.4})$ diesen Rest nach Ersetzen der durch Polymerisation verbrauchten Anteile der Monomeren sowie nach Wiederherstellen der für $(b_{2.1})$ gewählten Bedingungen der Temperatur und des
Druckes im Kreislauf erneut in das Rührbett
entspannt.

Tabelle I

| Beispiel Nr. | Monomerengemisch in Vol.-% | | | $\frac{T}{°C}$ | PK g/g |
|---|---|---|---|---|---|
| | Äthylen | Propylen | 3.Monomer | | |
| 1 | 92,1 | 3,8 | 4,1[x] | 90 | 12.000 |
| 2 | 92,0 | 4,0 | 4,0[x] | 95 | 13.000 |
| 3 | 91,0 | 8,0 | 1,0[y] | 80 | 6.540 |
| 4 | 96,2 | 1,9 | 1,9[x] | 102 | 16.000 |

Tabelle II

| Beispiel Nr. | Einpolymerisierte Molteile | | | Dichte g/cm³ | MI g/10' |
| --- | --- | --- | --- | --- | --- |
| | Äthylen | Propylen | 3. Monomer | | |
| 1 | 100 | 2,4 | 2,5[x] | 0,922 | 0,47 |
| 2 | 100 | 2,6 | 2[x] | 0,922 | 1 |
| 3 | 100 | 4,9 | 0,8[y] | 0,920 | 0,03 |
| 4 | 100 | 1,3 | 0,9[x] | 0,934 | 0,35 |

[x] = α-Buten;   [y] = α-Hexen

<u>Patentanspruch</u>

Verfahren zum kontinuierlichen Herstellen von Äthylenterpolymerisaten, die eine Dichte (nach DIN 53 479) von
0,91 bis 0,95 g/cm$^3$ sowie einen Schmelzindex (190°C/2,16 kg
nach DIN 53 735) von 0,01 bis 2 g/10 min aufweisen und

(A)   auf 100 Molteile einpolymerisiertes Äthylen

(B)   0,1 bis 10 Molteile einpolymerisiertes Propylen sowie

(C)   0,1 bis 7 Molteile einpolymerisiertes $C_4$- bis
      $C_6$-$\alpha$-Monoolefin

enthalten, durch Polymerisation eines entsprechenden Gemisches der zugrundeliegenden Monomeren mittels eines Katalysators vom Phillips-Typ, der Chromtrioxid auf einem
anorganischen Träger enthält, bei Temperaturen im Bereich
von 60 bis 120°C und Drücken im Bereich von 10 bis 80 bar
in Abwesenheit flüssiger Verdünnungsmittel, <u>dadurch ge-
kennzeichnet</u>, daß

(a)   ein Katalysator eingesetzt wird, zu dessen Erzeugung
      man

      ($a_1$)  zunächst ein feinteiliges Kieselsäure-Xerogel
             herstellt, indem man

      ($a_{1.1}$)  von einem 10 bis 25 Gewichtsprozent Feststoff
                 (berechnet als Siliciumdioxid) enthaltenden
                 Kieselsäure-Hydrogel ausgeht,

      ($a_{1.2}$)  aus diesem Hydrogel mittels einer organischen
                 Flüssigkeit aus der Reihe der $C_1$- bis $C_4$-Alka-
                 nole und/oder $C_3$- bis $C_5$-Alkanone mindestens

60 % des in dem Hydrogel enthaltenen Wassers extrahiert,

($a_{1.3}$) das dabei erhaltene entwässerte, mit der organischen Flüssigkeit behandelte Gel solange trocknet, bis bei 100°C unter einem Vakuum von 10 Torr während 30 Minuten kein Gewichtsverlust mehr auftritt (Xerogel-Bildung) und

($a_{1.4}$) das so gewonnene Xerogel auf Teile mit einem Durchmesser von 20 bis 2000 µm bringt,

($a_2$) dann dieses Xerogel aus einer 0,05- bis 5-gewichtsprozentigen Lösung von Chromtrioxid in einem $C_3$- bis $C_5$-Alkanon oder einer 0,05- bis 15-gewichtsprozentigen Lösung einer unter den Bedingungen der Stufe ($a_3$) in Chromtrioxid übergehenden Chromverbindung in einem $C_1$- bis $C_4$-Alkanol – wobei das jeweilige Lösungsmittel nicht mehr als 20 Gewichtsprozent Wasser enthalten darf – heraus unter Verdampfen des Lösungsmittels mit der gewünschten Menge Chrom belädt und

($a_3$) schließlich das hierbei resultierende Produkt in einem wasserfreien, Sauerstoff in einer Konzentration von über 10 Volumenprozent enthaltenden Gasstrom 10 bis 1000 Minuten auf einer Temperatur von 400 bis 1100°C hält; und

(b) das Polymerisationsmedium ein zentrisches Rührbett aus kleinteiligem Polymerisat ist, mit den Maßgaben, daß

($b_1$) das Polymerisationsmedium im peripheren Bereich des Rührbetts nach oben und im zentralen Bereich des Rührbetts nach unten bewegt wird, derart, daß
im Rührbett eine Froudezahl von 0,5 bis 5 gegeben
ist und

(b$_2$) im Polymerisationsmedium die Abfuhr der Polymerisationswärme im wesentlichen durch Entspannungskühlung erfolgt, derart, daß man

(b$_{2.1}$) das zu polymerisierende Gemisch der Monomeren
außerhalb des Reaktionsraumes auf eine Temperatur, die mindestens 30$^o$C unter der Temperatur im Reaktionsmedium liegt, sowie einen Druck,
der mindestens 20 bar über dem Druck im
Reaktionsmedium liegt, bringt,

(b$_{2.2}$) dieses Gemisch in überschüssiger Menge in das
Rührbett entspannt,

(b$_{2.3}$) den nicht durch Polymerisation verbrauchten Rest
des Gemischs der Monomeren aus dem Reaktionsraum abzieht, und

(b$_{2.4}$) diesen Rest nach Ersetzen der durch Polymerisation verbrauchten Anteile der Monomeren sowie
nach Wiederherstellen der für (b$_{2.1}$) gewählten
Bedingungen der Temperatur und des Druckes
im Kreislauf erneut in das Rührbett entspannt.

Europäisches Patentamt

# EUROPÄISCHER RECHERCHENBERICHT

Nummer der Anmeldung

EP 80 10 2813

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D | DE - A - 2 540 279 (BASF) <br> * Anspruch * | 1 |
| D | DE - A - 2 539 103 (BASF) <br> * Anspruch 1 * | 1 |
| D | DE - A - 2 104 656 (BASF) <br> * Anspruch 1 * | 1 |

**KLASSIFIKATION DER ANMELDUNG (Int.Cl. 3)**

C 08 F 210/16
4/24
2/34

**RECHERCHIERTE SACHGEBIETE (Int. Cl. 3)**

C 08 F 2/34
4/22
4/24
10/00
10/14
110/00
110/14
210/00
210/18

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 09-10-1980 | PERMENTIER |

EPA form 1503.1  06.78